# EUROPEAN PATENT SPECIFICATION

(11) **EP 1 682 617 B1**
(45) Date of publication and mention of the grant of the patent: **31.10.2007**
(21) Application number: 04800265.3
(22) Date of filing: 04.11.2004
(51) Int. Cl.: C08L 101/00, C09D 201/00

(54) **RADIATION CURABLE WATERBORNE COMPOSITION**
STRAHLENHÄRTBARE WÄSSRIGE ZUSAMMENSETZUNG
COMPOSITION AQUEUSE DURCISSABLE PAR EXPOSITION A UN RAYONNEMENT

(30) Priority: 12.11.2003 SE 0302976
(43) Date of publication of application: 26.07.2006
(73) Proprietor: Perstorp Specialty Chemicals AB, 284 80 Perstorp (SE)
(72) Inventor: JAMES, David, S-252 25 Helsingborg (SE); HÄGGMAN, Bo, S-224 65 Lund (SE)
(74) Representative: HOFFMANN EITLE
(86) International application number: PCT/SE2004/001602
(87) International publication number: WO 2005/047396

(56) References cited:
- WO-A1-96/07688
- WO-A1-03/062306
- WO-A2-02/22700

## Description

The present invention refers to a waterborne radiation curable composition, such as an emulsion, a dispersion or a solution, comprising at least one amphiphilic dendritic polymer and at least one non-amphiphilic radiation curable oligomer or polymer, such as an unsaturated polyester or polyether and/or an acrylic oligomer or polymer. In a further aspect the present invention refers to the use of said amphiphilic dendritic polymer as dispersing resin for or non-amphiphilic radiation curable oligomers and polymers and to the use of said radiation curable waterborne composition in coatings and inks.

A waterborne coating or resin, such as an oligomer or polymer, is one that is diluted with water before use. Even though the dominant volatile is water, many waterborne coatings contain some solvent. Latex coatings dominate the architectural market, interior as well as exterior, with flat, semi-gloss and gloss coatings. Waterborne systems are also used in industrial maintenance coatings based on water soluble or dispersible resin systems. A further class include waterborne alkyds and polyesters. Although no longer the principal class of resins used in coatings, alkyds are still very important and a wide range of types of alkyds are manufactured.

Radiation curable compositions are well-known technologies and used in for instance printing inks, paints and lacquers for furniture and packaging materials as well as for adhesives. Further application areas include for instance dental materials. Radiation curable compositions are environmentally suitable and pleasing as they do not contain volatile solvents. They exhibit furthermore rapid curing and through hardening when exposed to for instance ultraviolet (UV) light or electron beams (EB). The compositions most often contain one or more oligomers or polymers having an unsaturation, normally as acrylate or maleate. These oligomers and polymers are usually high viscous and are, to obtain applicable viscosities, diluted with various monomers. The monomers are typically vinyl monomers, such as esters of mono, di, tri or polyfunctional alcohols and an acrylic acid and styrenes. The designations acrylic acid is hereinafter understood as any of the four commonly available unsaturated acids, propenoic acid (acrylic acid, vinyl formic acid), 2-methylpropenoic acid (methacrylic acid) and 2-butenoic acid (crotonic acid or β-methyl acrylic acid) in its cis (isocrotonic acid) and trans form (crotonic acid) and acrylic and acrylate as derived from any of said four unsaturated acids.

Unsaturated polyesters are curing and/or drying high molecular compounds used in for instance composites, paints, lacquers and similar binders. Unsaturated polyester are substantially based on unsaturated, such as maleic acid/anhydride and/or fumaric acid, and saturated acids, such as phthalic acids/anhydrides, which acids/anhydrides typically are esterified with aliphatic saturated diols, such as ethylene glycol, propylene glycol and neopentyl glycol. Unsaturated alcohols, for example allyl ethers of glycerol, trimethylolethane, trimethylolpropane and pentaerythritol are also commonly used. Minor amounts of polyfunctional alcohols may also be included. Crosslinking of unsaturated polyesters is performed by addition of peroxides and cobalt salts or by addition of initiators for curing with ultraviolet light (UV), infrared light (IR) or electron beams (EB). The use of unsaturated polyesters normally involves a certain amount of vinyl monomers, like styrene and/or 4-tert.butylstyrene, in applications such as castings, mouldings, gelcoats, UV curable putties and the like.

Protective and decorative paints and lacquers, glues and other drying and curing compositions based on acrylic, methacrylic, and/or crotonic oligomers and polymers meet with an increasing importance within a large number of applications. The increasing importance is substantially due to the utility and unique properties of said polymers, such as short curing times, excellent film properties, low or no amounts of solvents. Acrylic compositions for said and other applications often comprise a number of various components, such as one or more polyester acrylates, acrylic modified fumarate esters, urethane acrylates, epoxy acrylates and/or glycidyl acrylates and one or more functional monomers, for example esters of an alcohol and an acrylic acid. Functional monomers work, besides being monomers, also as viscosity reducing diluents for said oligomers and polymers. The properties of an acrylate, such as film forming, curing, drying and the like, are determined by for instance the molecular weight and molecular structure as well as the chemical and physical structure of said acrylate.

The composition and technology of radiation curable systems and acrylic monomers are further disclosed in for instance "Chemistry & Technology of UV and EB Formulations for Coatings, Inks and Paints" - Volume 2: "Prepolymers and Reactive Diluents for UV and EB Curable Formulations" by N.S. Allen, M.S. Johnson, P.K.T. Oldring and S. Salim, 1991 Selective Industrial Training Associates Ltd. London, U.K.

The use of water instead of monomers to reduce oligomer viscosities offers interesting alternatives. Excellent properties of dispersions cured without crosslinking monomers can be obtained and the use of monomers to obtain specific properties and/or performances is not avoided. The two main techniques for manufacturing waterborne systems are a) external emulsification, wherein a resin is emulsified in water using one or more emulsifiers and b) internal or self emulsifiable systems, wherein a resin is modified by building in groups, such as carboxyl groups which can be neutralised, rendering the resin emulsifiable in water.

Waterborne radiation curable systems imply and exhibit compared to 100% liquid systems, easily sprayed coatings, low shrinkage, improved adhesion and a reduced or zero monomer content. Vinyl monomers, such as styrenes and acrylic monomers are generally highly reactive and as such potentially hazardous being skin and eye irritants and possible sensitisers, being allergenic, provoking asthenia and having a strong and unpleasant smell, all resulting in a limited or banned use.

Waterborne radiation curable systems based on cellulose, such as cellulose esters, are disclosed in for instance US 5,254,603, EP 0 426 085, DE 24 36 614, US 3,615,792 and WO 01/16239. Radiation curing polyesters are disclosed in for instance EP 0 982 339, EP 0 425 947 and DE 33 40 489. EP 0 982 339 teaches a waterborne radiation curable polyester composition obtained by mixing or pre-condensing a water dilutable radiation curable emulsifying resin having unreacted acid groups giving an acid number of 20-300 mg KOH/g, such as acrylated pentaerythritol ethoxylate, and a water undilutable radiation curable polymer having ester and/or ether groups, such as trimethylolpropane ethoxylate reacted with acrylic acid and a carboxylic acid other than acrylic acid. EP 0 425 947 discloses a water dilutable binder comprising at least one polymerisable unsaturation, said binder is obtained by condensing at least one polyoxyalkylene glycol, an alkoxylated triol, an alkoxylated 3-6 functional alcohol, a polycarboxylic acid and an unsaturated monocarboxylic acid. DE 33 40 586 discloses a water emulsifiable radiation curable polyester prepared by condensing an anhydride of a dicarboxylic acid, a polyether diol, an alkoxylated triol and acrylic acid. A further species of waterborne radiation curable resins is disclosed in EP 0 574 775 wherein an emulsifiable and polymerisable binder is obtained by reacting a (meth)acrylic prepolymer and a water emulsifiable unsaturated polyester with a polyfunctional isocyanate.

Waterborne radiation curable systems are, furthermore, discussed by C. Decker et al in "UV Radiation Curing of Waterborne Coatings", Advances in Coatings Technology, ACT '02, International Conference, Katowice, Poland, Nov. 5-8, 2002, pages 11/1 and 11/3-11/10, by W.D. Davis et al in "Development and Application of Waterborne Radiation Curable Coatings", Waterborne Coatings and Adhesives, Special Publication (ISSN 0260-6291), Royal Society of Chemistry 1995, pages 81-94 and by Frank J. Kosnik et al in "Approaches to Water-Based Radiation Curable Coatings", Proceedings of the Water-Borne and Higher-Solids Coatings Symposium, New Orleans, USA, Feb. 1-3, 1989, pages 204-11.

WO 03/062306 A1 describes chain extended dendritic polyether comprising a dendritic core polymer and a chain extension bonded to said core polymer, which chain extended dendritic polyether optionally is at least partially chain terminated and/or partially functionalized. The core polymer is a polyhydric dendritic polyether and the chain extension is obtained by addition of at least one alkylene oxide to at least one hydroxyl group in said core polymer. WO 02/22700 A2 pertains to a radiation curable dendritic oligomer or polymer obtainable by addition of at least one secondary amine to at least one acrylic double bond in a dendritic acrylate oligomer or polymer and to a process for production of said radiation curable dendritic oligomer or polymer.

The radiation curable composition of the present invention is a new category of waterborne radiation curable systems since it uses a dendritic structure to form the surface active compound. The dendritic structure quite unexpectedly acts as an emulsifier having the advantage of optionally being curable, such as photocurable. The radiation curable composition of the present invention can, contrary to externally emulsified waterborne systems using surfactants, provide fully crosslinkable systems. Furthermore, the radiation curable composition of the present invention reduce or eliminate the use of said monomers and hence said disadvantages.

The present invention disclose a novel waterborne radiation curable composition, such as an emulsion, a dispersion or a solution, comprising an amphiphilic dendritic polymer, which optionally and preferably is radiation curing, as dispersing agent for non-amphiphilic radiation curable oligomers and/or polymers, such as unsaturated polyesters or polyethers, said polyester or polyether acrylates, methacrylates or β-methyl acrylates, said acrylic, methacrylic or β-methyl acrylic modified maleate polyesters, said epoxy acrylates, methacrylates or β-methyl acrylates, said glycidyl acrylates, methacrylates or β-methyl acrylates and said urethane acrylates, methacrylates or β-methyl acrylates, typically used in conventional non-waterborne systems.

The waterborne composition of the present invention comprises at least one amphiphilic dendritic polymer, at least one non-amphiphilic radiation curable oligomer or polymer, water and optionally at least one initiator initiating and/or promoting radiation curing, such as UV, IR or EB curing. Said waterborne composition may optionally comprise at least one additional oligomer, polymer and/or monomer and/or at least one additional component, such as a pigment, a filler, a diluent, such as a reactive diluent, a coalescent agent and/or an additive, such as a neutralising, flow and/or levelling additive.

The amphiphilic dendritic polymer is nonionic and self-emulsifying and is built up from a dendritic core polymer, having terminal hydroxyl groups, being chain extended by a combination of hydrophobic chains comprising a carboxylic acid and hydrophilic polyethylene glycol chains. The amphiphilic dendritic polymer is in the composition of the present invention used as a dispersing resin and stabiliser for emulsification of for instance unsaturated polyesters or polyethers, polyester and polyether acrylates, acrylic modified maleate esters and polyesters, epoxy acrylates, glycidyl acrylates and/or urethane acrylates, typically used in non-waterborne systems. Said unsaturated polyesters, said polyester and polyether acrylates and said acrylic modified maleate esters and polyesters include dendritic species thereof. Acrylate is here and in the following disclosure understood as disclosed above, whereby acrylate and acrylic include acrylate, methacrylate, β-methyl acrylate (crotonate, isocrotonate), acrylic, methacrylic and β-methyl acrylic (crotonic, isocrotonic).

The amphiphilic dendritic polymer is built up from a polyhydric dendritic core polymer having at least 4 terminal hydroxyl groups and thus a hydroxyl functionality (*f*) of at least 4, such as 8, 16, 32 or 64, at least one monocarboxylic acid bonded to at least one and at most *f*-1 said terminal hydroxyl groups and at least one adduct, obtainable by addition of a monoalkylated polyethylene glycol to a dicarboxylic acid or a corresponding anhydride, likewise bonded to at least one and at most *f*-1 said terminal hydroxyl groups.

The dendritic core polymer of said amphiphilic dendritic polymer is in various embodiments a polyhydric dendritic polymer as disclosed in for instance WO 93/17060, WO 93/18079, WO 96/07688, WO 96/12754, WO 99/00439, WO 99/00440, WO 00/56802 and WO 02/40572. Said polyhydric dendritic core polymer is in these embodiments most preferably obtainable by addition of at least one di, tri or polyhydric monocarboxylic acid to a di, tri or polyhydric core molecule at a molar ratio yielding a polyhydric dendritic polymer comprising a core molecule and at least one branching generation bonded to said di, tri or polyhydric core molecule or is obtainable by ring opening addition of at least one oxetane of a di, tri or polyhydric compound to a di, tri or polyhydric core molecule at a molar ratio yielding a polyhydric dendritic polymer comprising a core molecule and at least one branching generation bonded to said di, tri or polyhydric core molecule.

Said di, tri or polyhydric core molecule is most preferably a 1,ω-diol, a 5-hydroxy-1,3-dioxane, a 5-hydroxyalkyl-1,3-dioxane, a 5-alkyl-5-hydroxyalkyl-1,3-dioxane, a 5,5-di(hydroxyalkyl)-1,3-dioxane, a 2-alkyl-1,3-propanediol, a 2,2-dialkyl-1,3-propanediol, a 2-hydroxy-1,3-propanediol, a 2-hydroxy-2-akyl-1,3-propanediol, a 2-hydroxyalkyl-2-alkyl--1,3-propanediol, a 2,2-di(hydroxyalkyl)-1,3-propanediol, a dimer, trimer or polymer of a said di, tri or polyhydric alcohol, or a reaction product between at least one alkylene oxide and a said di, tri or polyhydric alcohol or a said dimer, trimer or polymer.

Said di, tri or polyhydric monocarboxylic acid is most preferably 2,2-dimethylolpropionic acid, α,α-bis(hydroxymethyl)butyric acid, α,α,α-tris(hydroxymethyl)acetic acid, α,α-bis(hydroxymethyl)valeric acid, α,α-bis(hydroxymethyl)propionic acid, α,β-dihydroxy-propionic acid and/or 3,5-dihydroxybenzoic acid.

Said oxetane is most preferably a 3-alkyl-3-(hydroxyalkyl)oxetane, a 3,3-di(hydroxyalkyl)oxetane, a 3-alkyl-3-(hydroxyalkoxy)oxetane, a 3-alkyl-3-(hydroxyalkoxyalkyl)oxetane or a dimer, trimer or polymer of a 3-alkyl-3-(hydroxyalklyl)oxetane, a 3,3-di(hydroxyallcyl)oxetane, a 3-alkyl-3-(hydroxyalkoxy)oxetane or a 3-alkyl-3-(hydroxy-alkoxyalkyl)oxetane.

Said monocarboxylic acid, by reaction added to said polyhydric dendritic core polymer, is in embodiments of the amphiphilic dendritic polymer most preferably an aliphatic linear or branched unsaturated or saturated carboxylic acid having for instance 8-24, such as 8-12, carbon atoms in its main carbon chain, such as lauric acid, tall oil fatty acid, soybean fatty acid, safflower fatty acid, sunflower fatty acid, cottonseed fatty acid, castor fatty acid, oleic acid, linoleic acid, linolenic acid, stearic and/or isostearic.

Further embodiments of said monocarboxylic acid, providing for instance radiation curable sites, are found among unsaturated acids such as vinyl and/or allyl functional carboxylic acids. Suitable vinyl and/or allyl functional carboxylic acids can be exemplified by acrylic acid, methacrylic, β-methyl acrylic acid (crotonic/isocrotonic acid) and allyloxycarboxylic acids. Said vinyl and/or allyl functional carboxylic acids are preferably used in combinations with one or more of the previously disclosed monocarboxylic acids having said 8-24 carbon atoms.

Said adduct, by reaction added to said polyhydric dendritic polymer, is preferably and advantageously built up from at least one monoalkylated polyethylene glycol having a molecular weight of at least 500, such as 500-2500 or 700-1500, and at least one linear or branched aliphatic, cycloaliphatic or aromatic saturated or unsaturated dicarboxylic acid or a corresponding anhydride, such as fumaric acid, maleic anhydride, succinic anhydride and/or glutaric acid. Said monoalkylated polyethylene glycol is most preferably a monomethylated polyethylene glycol.

The preferred weight ratio amphiphilic dendritic polymer to non-amphiphilic radiation curable oligomer or polymer, in the waterborne composition of the present invention, is between 1:99 and 99:1, such as 50:50, 10:90, 20:80, 70:30, 90:10, 80:20 or 70:30. The most preferred weight ratio is typically 20-30% by weight of the amphiphilic dendritic polymer and 70-80% by weight of the non-amphiphilic oligomer or polymer.

Said at least one initiator optionally included in the waterborne composition of the present invention is in embodiments preferably a photoinitiator, initiating and/or promoting UV curing and is preferably admixed in an amount of for instance 0.1-5%, preferably 1-5%, by weight calculated on solid polymers, oligomers, monomers and other included film forming components. Accordingly, the radiation curable waterborne composition of the present invention is in the most preferred embodiments thereof a UV curable composition.

In a further aspect the present invention refers to the use of the amphiphilic dendritic polymer herein disclosed, as water dispersing resin for non-amphiphilic radiation curable oligomers and polymers, such as said unsaturated polyesters or polyethers, said polyester or polyether acrylates, methacrylates or β-methyl acrylates, said acrylic, methacrylic or β-methyl acrylic modified maleate polyesters, said epoxy acrylates, methacrylates or β-methyl acrylates, said glycidyl acrylates, methacrylates or β-methyl acrylates and said urethane acrylates, methacrylates or β-methyl acrylates and as component in waterborne radiation curable coating and ink compositions, such as UV curable printing inks and industrial coatings.

In yet a further aspect, the present invention refers to the use of the waterborne radiation curable composition herein disclosed, in waterborne radiation curable coatings and inks, such as UV curable printing inks and industrial coatings.

Without further elaboration, it is believed that one skilled in the art can, using the preceding description, utilise the present invention to its fullest extent. The following preferred specific embodiments are, therefore, to be construed as merely illustrative and not limitative of the remainder of the disclosure in any way whatsoever. In the following, Examples 1-6 illustrate preparation of components included in the present invention, embodiments of the resin composition of the present invention and evaluations of said embodiments in UV curable coatings. Table 1 presents results from said evaluations.
- Example 1:: Synthesis of a polyalkoxylated adduct used in Example 3.
- Example 2:: Synthesis of a fatty acid modified dendritic polyester used in Example 3.
- Example 3:: Synthesis of an amphiphilic dendritic polymer, according to an embodiment of the invention, built up from fatty acid modified dendritic polyester obtained in Example 2 and the polyalkoxylated adduct obtained in Example 1.
- Example 4:: Synthesis of an amphiphilic dendritic polymer containing acrylate groups.
- Example 5:: Synthesis of a non-amphiphilic acrylate dendritic polyester.
- Example 6:: Preparation of a waterborne UV curable polyester composition, according to an embodiment of the invention, comprising the product obtained in Example 3.
- Example 7:: Preparation of a waterborne UV curable urethane composition, according to an embodiment of the invention, comprising the product obtained in Example 3.
- Example 8:: Preparation of a waterborne UV curing polyester composition comprising the products obtained in Example 4 and 5
- Example 9:: Evaluation of the compositions obtained in Examples 6, 7 and 8 in UV curable coatings.

### Example 1

450 g of a monomethylated polyethylene glycol (molecular weight 750 g/mole) and 58.8 g of maleic anhydride were charged in a 1 l reaction flask, equipped with stirrer and nitrogen inlet, and were under nitrogen purge heated to 120°C. The reaction was allowed to continue at said temperature until all maleic anhydride was reacted.

### Example 2

246 g of Boltorn^{®} H20 (hydroxyfunctional dendritic polyester having a molecular weight of 1750 g/mole and a hydroxyl value of 495 mg KOH/g, Perstorp Specialty Chemicals AB) and 440 g of sunflower fatty acid was charged in a 1 l reaction flask, equipped with a stirrer and a Dean Stark water trap, and heated to 125°C. 0.68 g of benzoic acid, 0.07 g of Fascat^{®} 4100 (esterification catalyst) and xylene was now added and the temperature was increased to 190°C and kept for about 5 hours. The acid number was after said 5 hours 2.5 mg KOH/g and xylene was removed under vacuum. The reaction was stopped by cooling to room temperature. Obtained product had a hydroxyl value of 62 mg KOH/g.

### Example 3

450 g of the dendritic product obtained in Example 2, 249.9 g of the adduct obtained in Example 1, 59 g of xylene (azeotropic solvent) and 0.7 g of Fascat^{®} 4100 (esterification catalyst, Elf Autochem) were charged in a 2 l reaction flask, equipped with a stirrer, a thermometer, a condenser and a Dean Stark water trap. The reaction mixture was heated to 240°C and the reaction was allowed to continue at said temperature until an acid value of less than 10 mg KOH/g was obtained.

### Example 4

50 g of Boltorn^{®} H20 (hydroxyfunctional dendritic polyester having a molecular weight of 1750 g/mole and a hydroxyl value of 495 mg KOH/g, Perstorp Specialty Chemicals AB), 11.5 g of acrylic acid, 51 g of sunflower acid, 40 g of toluene, 0.8 g of methane sulphonic acid and 0.05 g of methoxyphenol were charged in a 500 ml reaction flask, equipped with a stirrer and a dean stark water trap and heated to 120°C for reflux. The reaction was allowed to continue for 8 hours and an acid value of 10 mg KOH/g was determined. 70 g of the adduct obtained in Example 1 was now charged to the reaction flask. The reaction was allowed to continue at said temperature until an acid number of less than 10 mg KOH/g was reached. The reaction product was cooled to 60°C and toluene was removed by vacuum.

### Example 5

100 g of Boltorn^{®} H2003 (fatty acid modified hydroxyfunctional polyester, Perstorp Specialty Chemicals AB), 41 g of acrylic acid, 1.6 g of methane sulphonic acid, 0.08 g of methoxyphenol and 100 g of toluene were charged in a 500 ml reaction flask, equipped with a stirrer and a dean stark water trap and heated to 120°C for reflux. The reaction was allowed to continue for 8 hours and the reaction mixture was then cooled to room temperature. The reaction mixture was neutralised with an aqueous solution of KOH (4%) and separated. The organic phase was further washed twice with water and toluene was evaporated under vacuum.

### Example 6

20 g of the amphiphilic dendritic polymer obtained in Example 3 and 80 g of a polyester acrylate oligomer (Ebecryl^{®} EB 657, UCB) were charged and mixed in a round bottomed flask. The mixture was neutralised to pH 7.5 using dimethyl ethanolamine and under stirring heated to 70°C. 100 g of water was slowly and continuously added and admixed during 15 minutes. The final emulsion had a solid content of 50% and a viscosity of 80 mPas at 25°C. The emulsion was stable at room temperature for at least 1 month.

### Example 7

20 g of the amphiphilic dendritic polymer obtained in Example 3 and 80 g of a urethane acrylate oligomer (Ebecry14^{®} EB 5129, UCB) were charged and mixed in a round bottomed flask. The mixture was under stirring heated to 70°C and 100 g of water was slowly and continuously added and admixed during 15 minutes. The final emulsion had a solid content of 50% and a viscosity of 220 mPas at 25°C. The emulsion was stable at room temperature for at least 1 month.

### Example 8

10 g of the amphiphilic dendritic polymer obtained in Example 4 and 90g of the dendritic acrylate polymer obtained in Example 5 were charged and mixed in a round bottom flask. The mixture was neutralised to pH 7 using dimethyl ethanol amine and heated 70°C under stirring. 100 g of warm water was slowly and continuously added during 15 minutes. The final emulsion has a solid content of 50% and a viscosity of 150 mPas at 25°C.

### Example 9

3% by weight, calculated on solid polymers and oligomers, of a photoinitiator (Darocure^{®} 1173, Ciba Specialty Chemicals) was added to and admixed into the emulsions obtained in Examples 6, 7 and 8. Films were applied on glass panels (filmthickness: 60 µm wet) and the water was in an oven flashed off at 70°C for 10 minutes. The coatings were cured in air by being passed 5 times under a 80 W/cm UV bulb and at a speed of 20 m/minute and characterised by MEK-rubs (methyl ethyl ketone rubs), pendulum hardness (König pendulum) according to ASTM D4366-95 and Erichsen flexibility according to ASTM E-643. The result is given in Table 1 below.

**Table 1**

| | Number of MEK-rubs | Pendulum hardness König secs | Erichsen Flexibility mm |
|---|---|---|---|
| Coating of Example 6 | 25 | 46 | >8 |
| Coating of Example 7 | >200 | 155 | 5.2 |
| Coating of Example 8 | > 200 | 135 | 4.4 |

## Claims

1. A radiation curable waterborne composition comprising at least one amphiphilic dendritic polymer, at least one non-amphiphilic radiation curable oligomer or polymer and water and optionally at least one initiator initiating and/or promoting radiation, such as UV, IR or EB curing, and optionally at least one additional oligomer, polymer and/or monomer and/or optionally at least one additional component, such as a pigment, a filler, a diluent, such as a reactive diluent, and/or an additive, such as a neutralising, flow and/or levelling additive
**characterised in, that** said at least one amphiphilic dendritic polymer is built up from a polyhydric dendritic core polymer having at least 4 terminal hydroxyl groups and thus a hydroxyl functionality (*f*) of at least 4, such as 8, 16 or 32, and at least one monocarboxylic acid bonded to at least one and at most *f*-1 said terminal hydroxyl group(s) and at least one adduct, obtainable by addition of at least one monoalkylated polyethylene glycol to at least one dicarboxylic acid or at least one corresponding anhydride, bonded to at least one and at most *f*-1 said terminal hydroxyl group(s), and that said at least one non-amphiphilic radiation curable oligomer or polymer is at least one unsaturated polyester or polyether, at least one polyester or polyether acrylate, methacrylate or β-methyl acrylate, at least one acrylic, methacrylic or β-methyl acrylic modified fumarate ester or polyester, at least one urethane acrylate, methacrylate or β-methyl acrylate, at least one epoxy acrylate, methacrylate or β-methyl acrylate and/or at least one glycidyl acrylate, methacrylate or β-methyl acrylate.

2. radiation curable waterborne composition according to Claim 1
**characterised in, that** said amphiphilic dendritic polymer is a radiation curable.

3. A radiation curable waterborne composition according to Claim 1 or 2
**characterised in, that** said polyhydric dendritic core polymer is obtainable by addition of at least one di, tri or polyhydric monocarboxylic acid to a di, tri or polyhydric core molecule at a molar ratio yielding a polyhydric dendritic polymer comprising a core molecule and at least one branching generation bonded to said di, tri or polyhydric core molecule.

4. A radiation curable waterborne composition according to Claim 1 or 2
**characterised in, that** said polyhydric dendritic core polymer is obtainable by ring opening addition of at least one oxetane of a di, tri or polyhydric compound to a di, tri or polyhydric core molecule at a molar ratio yielding a polyhydric dendritic polymer comprising a core molecule and at least one branching generation bonded to said di, tri or polyhydric core molecule.

5. A radiation curable waterborne composition according to any of the Claims 1-4
**characterised in, that** said at least one monoalkylated polyethylene glycol has a molecular weight of at least 500, such as 500-2500 or 700-1500.

6. A radiation curable waterborne composition according to any of the Claims 1-5
**characterised in, that** said at least one monoalkylated polyethylene glycol is a monomethylated polyethylene glycol.

7. A radiation curable waterborne composition according to any of the Claims 1-6
**characterised in, that** said at least one dicarboxylic acid or anhydride is fumaric acid, maleic anhydride, succinic anhydride and/or glutaric acid.

8. A radiation curable waterborne composition according to any of the Claims 1-7
**characterised in, that** said at least one carboxylic acid is an aliphatic linear or branched saturated or unsaturated carboxylic acid having 8-24 carbon atoms in its main carbon chain.

9. A radiation curable waterborne composition according to Claim 8
**characterised in, that** said at least one monocarboxylic acid is lauric acid, tall oil fatty acid, soybean fatty acid, safflower fatty acid, sunflower fatty acid, cottonseed fatty acid, castor fatty acid, oleic acid, linoleic acid, linolenic acid stearic acid and/or isostearic acid.

10. A radiation curable waterborne composition according to Claim 8 or 9
**characterised in, that** said at least one monocarboxylic acid is a vinyl and/or allyl functional carboxylic acid.

11. A radiation curable waterborne composition according to Claim 10
**characterised in, that** said at least one monocarboxylic acid is acrylic, methacrylic and/or β-methyl acrylic acid.

12. A radiation curable waterborne composition according to any of the Claims 1-11
**characterised in**, a weight ratio said amphiphilic dendritic polymer to said non-amphiphilic radiation curable oligomer or polymer of between 1:99 and 99:1, such as 50:50, 10:90, 20:80, 70:30, 90:10, 80:20 or 70:30.

13. A radiation curable waterborne composition according to any of the Claims 1-12
**characterised in, that** said at least one unsaturated polyester or polyether, said polyester or polyether acrylate, methacrylate or β-methyl acrylate, said acrylic, methacrylic or β-methyl acrylic modified fumarate ester or polyester is a dendritic species thereof.

14. A radiation curable waterborne composition according to any of the Claims 1-13
**characterised in, that** said at least one initiator is at least one photoinitiator.

15. A radiation curable waterborne composition according to any of the Claims 1-14
**characterised in, that** said optional at least one initiator is a photoinitiator present in an amount of 0.1-5%, preferably 1-5%, by weight calculated on solid polymers, oligomers and monomers included or optional in said resin composition.

16. A radiation curable waterborne composition according to any of the Claims 1-15
**characterised in, that** said resin composition is a UV curable resin composition.

17. Use of an amphiphilic dendritic polymer according to any of the Claims 1-11, as water dispersing resin for a non-amphiphilic radiation curable oligomer or polymer.

18. Use according to Claim 17, wherein said non-amphiphilic radiation curable oligomer or polymer is an unsaturated polyester or polyether, a polyester or polyether acrylate, methacrylate or β-methyl acrylate, an acrylic, methacrylic or β-methyl acrylic modified fumarate ester, a urethane acrylate, methacrylate or β-methyl acrylate, epoxy acrylate, methacrylate or β-methyl acrylate and/or a glycidyl acrylate, methacrylate or β-methyl acrylate.

19. Use of an amphiphilic dendritic polymer according to any of the Claims 1-11 in a radiation curable coating or ink composition, such as a UV curable industrial coating or a UV curable printing ink.

20. Use of a waterborne radiation curable composition according to any of the Claims 1-16, in a waterborne radiation curable coating or ink composition, such as a UV curable industrial coating or a UV curable printing ink.

## Patentansprüche

1. Strahlungshärtbare Zusammensetzung auf Wasserbasis, die wenigstens ein amphiphiles dendritisches Polymer, wenigstens ein nicht-amphiphiles strahlungshärtbares Oligomer oder Polymer und Wasser und gegebenenfalls wenigstens einen Initiator, der die Strahlungshärtung wie z.B. UV-, IR- oder EB-Härtung initiiert und/oder fördert, und gegebenenfalls wenigstens ein zusätzliches Oligomer, Polymer und/oder Monomer und/oder gegebenenfalls wenigstens eine zusätzliche Komponente wie ein Pigment, einen Füllstoff, ein Verdünnungsmittel, z.B. einen Reaktivverdünner, und/oder ein Additiv, z.B. ein neutralisierendes, ein Fließ- und/oder ein Verlaufadditiv, umfasst,
**dadurch gekennzeichnet, dass** das wenigstens eine amphiphile dendritische Polymer aus einem mehrere Hydroxylgruppen enthaltenden dendritischen Kernpolymer, das wenigstens vier terminale Hydroxylgruppen und somit eine Hydroxylfunktionalität (*f*) von wenigstens 4, wie z.B. 8, 16 oder 32, aufweist, und wenigstens einer Monocarbonsäure, die an wenigstens eine und an höchstens *f*-1 der terminalen Hydroxylgruppe(n) gebunden ist, und wenigstens einem Addukt, das durch Addition wenigstens eines monoalkylierten Polyethylenglycols an wenigstens eine Dicarbonsäure oder wenigstens ein korrespondierendes Anhydrid erhältlich ist und das an wenigstens ein und höchstens *f*-1 der terminalen Hydroxylgruppe(n) gebunden ist, aufgebaut ist, und dass das wenigstens eine nicht amphiphile strahlungshärtbare Oligomer oder Polymer wenigstens ein ungesättigter Polyester oder Polyether, wenigstens ein Polyester- oder Polyetheracrylat, -methacrylat oder -β-methylacrylat, wenigstens ein acrylisch, methacrylisch oder β-methylacrylisch modifizierter Fumaratester oder Polyester, wenigstens ein Urethanacrylat, -methacrylat oder -β-methylacrylat, wenigstens ein Epoxyacrylat, - methacrylat oder -β-methylacrylat und/oder wenigstens ein Glycidylacrylat, -methacrylat oder -β-methylacrylat ist.

2. Strahlungshärtbare Zusammensetzung auf Wasserbasis gemäß Anspruch 1, **dadurch gekennzeichnet, dass** das amphiphile dendritische Polymer strahlungshärtbar ist.

3. Strahlungshärtbare Zusammensetzung auf Wasserbasis gemäß Anspruch 1 oder 2, **dadurch gekennzeichnet, dass** das mehrere Hydroxylgruppen enthaltende dendritische Kernpolymer durch Addition wenigstens einer 2, 3 oder mehr Hydroxylgruppen enthaltenden Monocarbonsäure an ein 2, 3 oder mehr Hydroxylgruppen enthaltendes Kernmolekül in einem molaren Verhältnis erhältlich ist, das ein mehrere Hydroxylgruppen enthaltendes dendritisches Polymer ergibt, welches ein Kernmolekül und wenigstens eine Verzweigungsgeneration umfasst, die an das 2, 3 oder mehr Hydroxylgruppen enthaltende Kernmolekül gebunden ist.

4. Strahlungshärtbare Zusammensetzung auf Wasserbasis gemäß Anspruch 1 oder 2, **dadurch gekennzeichnet, dass** das mehrere Hydroxylgruppen enthaltende dendritische Kernpolymer durch eine Ringöffnungsaddition wenigstens eines Oxetans einer 2, 3 oder mehr Hydroxylgruppen enthaltenden Verbindung an ein 2, 3 oder mehr Hydroxylgruppen enthaltendes Kernmolekül in einem molaren Verhältnis erhältlich ist, das ein mehrere Hydroxylgruppen enthaltendes dendritisches Polymer ergibt, welches ein Kernmolekül und wenigstens eine Verzweigungsgeneration umfasst, die an das 2, 3 oder mehr Hydroxylgruppen enthaltende Kernmolekül gebunden ist.

5. Strahlungshärtbare Zusammensetzung auf Wasserbasis gemäß einem der Ansprüche 1 bis 4, **dadurch gekennzeichnet, dass** das wenigstens eine monoalkylierte Polyethylenglycol ein Molekulargewicht von wenigstens 500, wie z.B. 500 bis 2500 oder 700 bis 1500, aufweist.

6. Strahlungshärtbare Zusammensetzung auf Wasserbasis gemäß einem der Ansprüche 1 bis 5, **dadurch gekennzeichnet, dass** das wenigstens eine monoalkylierte Polyethylenglycol ein monomethyliertes Polyethylenglycol ist.

7. Strahlungshärtbare Zusammensetzung auf Wasserbasis gemäß einem der Ansprüche 1 bis 6, **dadurch gekennzeichnet, dass** die wenigstens eine Dicarbonsäure oder das Anhydrid Fumarsäure, Maleinsäureanhydrid, Bernsteinsäureanhydrid und/oder Glutarsäure ist.

8. Strahlungshärtbare Zusammensetzung auf Wasserbasis gemäß einem der Ansprüche 1 bis 7, **dadurch gekennzeichnet, dass** die wenigstens eine Carbonsäure eine aliphatisch lineare oder verzweigte gesättigte oder ungesättigte Carbonsäure mit 8 bis 24 Kohlenstoffatomen in ihrer Hauptkohlenstoffkette ist.

9. Strahlungshärtbare Zusammensetzung auf Wasserbasis gemäß Anspruch 8, **dadurch gekennzeichnet, dass** die wenigstens eine Monocarbonsäure Laurinsäure, Tallölfettsäure, Sojabohnenfettsäure, Saflorfettsäure, Sonnenblumenfettsäure, Baumwollsamenfettsäure, Castorfettsäure, Ölsäure, Linolsäure, Linolensäure, Stearinsäure und/oder Isostearinsäure ist.

10. Strahlungshärtbare Zusammensetzung auf Wasserbasis gemäß Anspruch 8 oder 9, **dadurch gekennzeichnet, dass** die wenigstens eine Monocarbonsäure eine Vinyl- und/oder Allyl-funktionale Carbonsäure ist.

11. Strahlungshärtbare Zusammensetzung auf Wasserbasis gemäß Anspruch 10, **dadurch gekennzeichnet, dass** die wenigstens eine Monocarbonsäure Acryl-, Methacryl- und/oder β-Methylacrylsäure ist.

12. Strahlungshärtbare Zusammensetzung auf Wasserbasis gemäß einem der Ansprüche 1 bis 11, **dadurch gekennzeichnet, dass** ein Gewichtsverhältnis des amphiphilen dendritischen Polymers zu dem nichtamphiphilen strahlungshärtbaren Oligomer oder Polymer von zwischen 1:99 und 99:1, wie z.B. 50:50, 10:90, 20:80, 70:30, 90:10, 80:20 oder 70:30, vorliegt.

13. Strahlungshärtbare Zusammensetzung auf Wasserbasis gemäß einem der Ansprüche 1 bis 12, **dadurch gekennzeichnet, dass** der wenigstens eine ungesättigte Polyester oder Polyether, das Polyester- oder Polyetheracrylat, -methacrylat oder -β-methylacrylat, der acrylisch, methacrylisch oder β-methylacrylisch modifizierte Fumarsäureester oder Polyester eine dendritische Spezies hiervon ist.

14. Strahlungshärtbare Zusammensetzung auf Wasserbasis gemäß einem der Ansprüche 1 bis 13, **dadurch gekennzeichnet, dass** der wenigstens eine Initiator wenigstens ein Photoinitiator ist.

15. Strahlungshärtbare Zusammensetzung auf Wasserbasis gemäß einem der Ansprüche 1 bis 14, **dadurch gekennzeichnet, dass** der optionale wenigstens eine Initiator ein Photoinitiator ist, der in einer Menge von 0,1 bis 5 Gew.-%, bevorzugt 1 bis 5 Gew.-%, berechnet auf die trockenen Polymere, Oligomere und Monomere, die in der Harzzusammensetzung eingeschlossen oder optional sind, vorliegt.

16. Strahlungshärtbare Zusammensetzung auf Wasserbasis gemäß einem der Ansprüche 1 bis 15, **dadurch gekennzeichnet, dass** die Harzzusammensetzung eine UVhärtbare Harzzusammensetzung ist.

17. Verwendung eines amphiphilen dendritischen Polymers gemäß einem der Ansprüche 1 bis 11 als wasserdispergierendes Harz für ein nicht-amphiphiles strahlungshärtbares Oligomer oder Polymer.

18. Verwendung gemäß Anspruch 17, worin das nicht-amphiphile strahlungshärtbare Oligomer oder Polymer ein ungesättigter Polyester oder Polyether, ein Polyester- oder Polyetheracrylat, -methacrylat oder -β-methylacrylat, ein acrylisch, methacrylisch oder β-methylacrylisch modifizierter Fumarsäureester, ein Urethanacrylat, -methacrylat oder -β-methylacrylat, Epoxyacrylat, -methacrylat oder -β-methylacrylat und/oder ein Glycidylacrylat, -methacrylat oder -β-methylacrylat ist.

19. Verwendung eines amphiphilen dendritischen Polymers gemäß einem der Ansprüche 1 bis 11 in einer strahlungshärtbaren Beschichtungs- oder Tintenzusammensetzung, wie einer UV-härtbaren industriellen Beschichtung oder einer UV-härtbaren Druckfarbe.

20. Verwendung einer strahlungshärtbaren Zusammensetzung auf Wasserbasis gemäß einem der Ansprüche 1 bis 16 in einer strahlungshärtbaren Beschichtungs- oder Tintenzusammensetzung auf Wasserbasis, wie einer UV-härtbaren industriellen Beschichtung oder einer UV-härtbaren Druckfarbe.

## Revendications

1. Composition aqueuse durcissable par rayonnement contenant au moins un polymère dendritique amphiphile, au moins un oligomère ou un polymère non amphiphile durcissable par rayonnement, de l'eau, éventuellement au moins un initiateur amorçant et/ou favorisant le rayonnement, comme un durcissement par UV, IR ou faisceau électronique, éventuellement au moins un oligomère, un polymère et/ou un monomère supplémentaire et/ou éventuellement au moins un composant supplémentaire, comme un colorant, une charge, un diluant, comme un diluant réactif, et/ou un additif, comme un additif neutralisant, fluide et/ou nivelant
**caractérisée en ce que** ledit au moins un polymère dendritique amphiphile est construit à partir d'un polymère central polyhydrique dendritique possédant au moins 4 groupements hydroxyles terminaux et ainsi une fonctionnalité hydroxyle (*f*) d'au moins 4, comme 8, 16 ou 32, et au moins un acide monocarboxylique lié à au moins une et au plus *f*-1 de(s)dit(s) groupements hydroxyles terminaux et au moins un adduit, qui peut être obtenu par addition d'au moins un polyéthylène glycol monoalkylé sur au moins un acide dicarboxylique ou au moins un anhydride correspondant, lié à au moins un et au plus *f*-1 de(s)dit(s) groupements hydroxyles terminaux et que ledit au moins un oligomère ou un polymère non amphiphile durcissable par rayonnement est au moins un polyester ou polyéther insaturé, au moins un polyester ou polyéther acrylate, méthacrylate ou β-méthylacrylate, au moins un ester ou un polyester de fumarate modifié par un groupe acrylique, méthacrylique ou β-méthylacrylique, au moins un uréthane acrylate, méthacrylate ou β-méthylacrylate, au moins un époxy acrylate, méthacrylate ou β-méthylacrylate et/ou au moins un glycidyl acrylate, méthacrylate ou β-méthylacrylate.

2. Composition aqueuse durcissable par rayonnement selon la revendication 1 **caractérisée en ce que** ledit polymère dendritique amphiphile est durcissable par rayonnement.

3. Composition aqueuse durcissable par rayonnement selon la revendication 1 ou 2 **caractérisée en ce que** ledit polymère central polyhydrique dendritique peut être obtenu par addition d'au moins un acide monocarboxylique di-, tri- ou polyhydrique sur une molécule centrale di-, tri- ou polyhydrique à un rapport molaire produisant un polymère polyhydrique dendritique contenant une molécule centrale et au moins une génération de ramification liée à ladite molécule centrale di-, tri- ou polyhydrique.

4. Composition aqueuse durcissable par rayonnement selon la revendication 1 ou 2 **caractérisé en ce que** ledit polymère central polyhydrique dendritique peut être obtenu par addition par ouverture de cycle d'au moins un oxétane d'un composé di-, tri- ou polyhydrique sur une molécule centrale di-, tri- ou polyhydrique à un rapport molaire produisant un polymère polyhydrique dendritique contenant une molécule centrale et au moins une génération de ramification liée à ladite molécule centrale di-, tri- ou polyhydrique.

5. Composition aqueuse durcissable par rayonnement selon l'une quelconque des revendications 1 à 4 **caractérisée en ce que** ledit au moins un polyéthylène glycol monoalkylé a un poids moléculaire d'au moins 500, comme 500-2500 ou 700-1500.

6. Composition aqueuse durcissable par rayonnement selon l'une quelconque des revendications 1 à 5 **caractérisée en ce que** ledit au moins un polyéthylène glycol monoalkylé est un polyéthylène glycol monométhylé.

7. Composition aqueuse durcissable par rayonnement selon l'une quelconque des revendications 1 à 6 **caractérisée en ce que** ledit au moins un acide ou anhydride dicarboxylique est l'acide fumarique, l'anhydride maléique, l'anhydride succinique et/ou l'acide glutarique.

8. Composition aqueuse durcissable par rayonnement selon l'une quelconque des revendications 1 à 7 **caractérisée en ce que** ledit au moins un acide carboxylique est un acide carboxylique saturé ou insaturé aliphatique, linéaire ou ramifié ayant de 8 à 24 atomes de carbone dans sa chaîne carbonée principale.

9. Composition aqueuse durcissable par rayonnement selon la revendication 8 **caractérisée en ce que** ledit au moins un acide monocarboxylique est l'acide laurique, l'acide gras de tallöl, l'acide gras de soja, l'acide gras de carthame, l'acide gras de tournesol, l'acide gras de graine de coton, l'acide gras de ricin, l'acide oléique, l'acide linoléique, l'acide linolénique, l'acide stéarique et/ou l'acide isostéarique.

10. Composition aqueuse durcissable par rayonnement selon la revendication 8 ou 9 **caractérisée en ce que** ledit au moins un acide monocarboxylique est un acide carboxylique vinylique et/ou allylique fonctionnel.

11. Composition aqueuse durcissable par rayonnement selon la revendication 10 **caractérisée en ce que** ledit au moins un acide monocarboxylique est l'acide acrylique, méthacrylique et/ou β-méthylacrylique.

12. Composition aqueuse durcissable par rayonnement selon l'une quelconque des revendications 1 à 11 **caractérisée par** un rapport massique du dit polymère dendritique amphiphile sur ledit oligomère ou polymère non amphiphile durcissable par rayonnement de 1:99 à 99:1, comme 50:50, 10:90, 20:80, 70:30, 90:10, 80:20 ou 70:30.

13. Composition aqueuse durcissable par rayonnement selon l'une quelconque des revendications 1 à 12 **caractérisée en ce que** ledit au moins un polyester ou polyéther insaturé, ledit polyester ou polyéther acrylate, méthacrylate ou β-méthylacrylate, ledit ester ou polyester de fumarate modifié par un groupe acrylique, méthacrylique ou β-méthylacrylique est un de ces espèces dendritiques.

14. Composition aqueuse durcissable par rayonnement selon l'une quelconque des revendications 1 à 13 **caractérisée en ce que** ledit au moins un initiateur est au moins un photoinitiateur.

15. Composition aqueuse durcissable par rayonnement selon l'une quelconque des revendications 1 à 14 **caractérisée en ce que** ledit au moins un initiateur facultatif est un photoinitiateur présent à une quantité de 0,1 à 5%, de préférence de 1 à 5%, en poids calculé par rapport aux polymères, oligomères et monomères solides, y compris ou éventuellement dans ladite composition de résine.

16. Composition aqueuse durcissable par rayonnement selon l'une quelconque des revendications 1 à 15 **caractérisée en ce que** ladite composition de résine est une composition de résine durcissable par UV.

17. Utilisation d'un polymère dendritique amphiphile selon l'une quelconque des revendications 1 à 11, comme une résine hydrodispersible pour un oligomère ou un polymère non amphiphile durcissable par rayonnement.

18. Utilisation selon la revendication 17, dans laquelle ledit oligomère ou polymère non amphiphile durcissable par rayonnement est un polyester ou un polyéther insaturé, un polyester ou polyéther acrylate, méthacrylate ou β-méthylacrylate, un ester ou un polyester de fumarate modifié par un groupe acrylique, méthacrylique ou β-méthylacrylique, un uréthane acrylate, méthacrylate ou β-méthylacrylate, un époxy acrylate, méthacrylate ou β-méthylacrylate et/ou un glycidyl acrylate, méthacrylate ou β-méthylacrylate.

19. Utilisation d'un polymère dendritique amphiphile selon l'une quelconque des revendications 1 à 11 dans une composition de revêtement ou d'encre durcissable par rayonnement, comme un revêtement industriel durcissable par UV ou une encre d'imprimerie durcissable par UV.

20. Utilisation d'une composition aqueuse durcissable par rayonnement selon l'une quelconque des revendications 1 à 16, dans une composition aqueuse de revêtement ou d'encre durcissable par rayonnement, comme un revêtement industriel durcissable par UV ou une encre d'imprimerie durcissable par UV.
